# EUROPÄISCHE PATENTSCHRIFT

(11) **EP 2 939 957 B1**
(45) Veröffentlichungstag und Bekanntmachung des Hinweises auf die Patenterteilung: **28.03.2018**
(21) Anmeldenummer: 15156475.4
(22) Anmeldetag: 25.02.2015
(51) Int. Cl.: B65G 47/08, B65G 57/22

(54) **ZUFUHRVORRICHTUNG FÜR DIE ZUFUHR VON GEFÜLLTEN SÄCKEN ZU EINER PALETTIERVORRICHTUNG**
FEEDING DEVICE FOR FEEDING FILLED BAGS TO A PALLETISING DEVICE
DISPOSITIF D'ALIMENTATION DESTINÉ À ALIMENTER EN SACS REMPLIS UN DISPOSITIF DE PALETTISATION

(30) Priorität: 28.04.2014 DE 102014105925
(43) Veröffentlichungstag der Anmeldung: 04.11.2015
(60) Teilanmeldung: 17205319.1
(73) Patentinhaber: Windmöller & Hölscher KG, 49525 Lengerich (DE)
(72) Erfinder: Kölker, Martin, 49477 Ibbenbüren (DE); Ahlers, Ralf, 49525 Lengerich (DE)

(56) Entgegenhaltungen:
- EP-A2- 2 366 640
- WO-A1-2004/039706
- DE-A1-102013 206 510
- FR-A1- 2 085 168
- FR-A7- 2 286 588
- US-A- 1 603 633
- US-A- 2 563 427
- US-A- 3 082 858
- US-A- 3 294 257
- US-A- 3 596 752
- US-A- 3 605 994
- US-A- 3 878 937
- US-A- 3 944 054
- US-A- 4 598 819
- US-A- 4 925 009
- US-A- 5 205 400
- US-A1- 2001 040 087
- US-A1- 2008 073 185
- US-A1- 2009 260 457
- US-B1- 6 315 100

## Beschreibung

Die vorliegende Erfindung betrifft eine Palettiervorrichtung für ein Stapeln von gefüllten Säcken mit einer Zufuhrvorrichtung.

Es ist bekannt, dass Palettiervorrichtungen für Palettieraufgaben eingesetzt werden. Dabei werden aus einzelnen gefüllten Säcken Lagen ausgebildet, welche aufeinander aufgestapelt einen Sackstapel ergeben. Ein solcher Sackstapel kann dabei zum Beispiel auf einer Palette angeordnet werden, um anschließend in einfacher und kostengünstiger Weise eine Lagerung sowie einen Weitertransport ermöglichen zu können. Hierfür ist es notwendig, dass in der Palettiervorrichtung eine Schiebevorrichtung vorgesehen wird, auf welcher die einzelnen Lagen ausgebildet und aufeinandergeschichtet werden. In diese Schiebevorrichtung müssen die einzelnen gefüllten Säcke zugeführt werden, wofür üblicherweise Zufuhrvorrichtungen vorgesehen sind.

Die US 3,294,257 offenbart eine Palettiervorrichtung für ein Stapeln von Kartons zu einem Stapel, mit einer Hubvorrichtung sowie einer Schiebevorrichtung zur Bewegung einer Lage von Kartons von einer Schiebefläche auf eine weitere Fläche. Ferner zeigt die US 3,294,257 eine Zufuhrvorrichtung für die Zufuhr der Kartons zu der Palettiervorrichtung, wobei die Zufuhrvorrichtung mehrere Zufuhrbänder für die Zufuhr von Kartons auf die Schiebefläche aufweist.

Nachteilhaft bei den bekannten Zufuhrvorrichtungen ist es, dass diese mit aufwendiger Antriebsfunktionalität versehen werden. So wird üblicherweise das jeweilige Zufuhrband der Zufuhrvorrichtung als sogenanntes schiebendes Band ausgebildet, um von der rückwärtigen Seite des Zufuhrbandes einen Antrieb zu gewährleisten. Dies ist insbesondere der häufig beengten konstruktiven Situation geschuldet, welche eine andere Antriebsanordnung nicht oder nur mit hohem Aufwand ermöglichen würde. Dies führt jedoch weiter zu verschlechtertem Bandlauf und insbesondere zu hohem Schlupf und hohem Verschleiß innerhalb des Zufuhrbandes. Nicht zuletzt wird die Positionierung der Säcke auf der Schiebefläche der Schiebevorrichtung dadurch verschlechtert und insbesondere ungenau ausgebildet. Damit wird die Lagegenauigkeit der Säcke auf der Schiebefläche negativ beeinflusst.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Zufuhrqualität und/oder die Standfestigkeit der Zufuhrvorrichtung zu verbessern.

Voranstehende Aufgabe wird gelöst durch eine Palettiervorrichtung mit den Merkmalen des Anspruchs 1. Weitere Merkmale und Details der Erfindung ergeben sich aus den Unteransprüchen, der Beschreibung und den Zeichnungen. Dabei gelten Merkmale und Details, die im Zusammenhang mit der Zufuhrvorrichtung beschrieben sind, selbstverständlich auch im Zusammenhang mit der erfindungsgemäßen Palettiervorrichtung und jeweils umgekehrt, so dass bezüglich der Offenbarung zu den einzelnen Erfindungsaspekten stets wechselseitig Bezug genommen wird bzw. werden kann.

Eine Zufuhrvorrichtung dient der Zufuhr von gefüllten Säcken zu einer Palettiervorrichtung. Hierfür weist die Zufuhrvorrichtung ein Zufuhrband für die Zufuhr von wenigstens einer Reihe der gefüllten Säcke auf eine Schiebefläche einer Schiebevorrichtung der Palettiervorrichtung auf. Eine Zufuhrvorrichtung zeichnet sich dadurch aus, dass das Zufuhrband ein Zufuhrende mit einer End-Umlenkrolle und einen Zufuhranfang mit einer Anfangs-Umlenkrolle aufweist. Dabei weist die Zufuhrvorrichtung eine Antriebsvorrichtung auf, welche mit der End-Umlenkrolle in Antriebsverbindung steht.

Durch diese Anordnung der Antriebsvorrichtung wird nun ein Antrieb der End-Umlenkrolle gewährleistet. Dies führt hinsichtlich der Transportrichtung des Zufuhrbandes zu einem ziehenden Antrieb, so dass das Transportband des Zufuhrbandes auf das Zufuhrende hin von dieser End-Umlenkrolle gezogen wird. Im Gegensatz zu den bekannten Lösungen wird dementsprechend ein ziehender Transport der gefüllten Säcke mit dem Zufuhrband möglich. Auf diese Weise sind ein deutlich verbesserter Bandlauf und vor allem ein geringerer Verschleiß durch geringeren Schlupf am Zufuhrband erzielbar.

Die Zufuhrvorrichtung dient dazu, die erfindungsgemäße Palettiervorrichtung mit den Säcken zu versorgen. Dafür ist in der Schiebevorrichtung der Zufuhrvorrichtung die beschriebene Schiebefläche vorgesehen, auf welcher jeweils eine komplette Lage für den Stapelverlauf angeordnet werden kann. Die jeweilige Lage kann aus einer, zwei oder mehreren Reihen der gefüllten Säcke bestehen. Selbstverständlich kann dementsprechend die Zufuhrvorrichtung auch zwei oder mehr Zufuhrbänder aufweisen, um zeitlich parallel auch zwei Reihen der gefüllten Säcke oder mehrere Reihen gleichzeitig zuführen zu können. Sobald die komplette Lage der gefüllten Säcke auf der Schiebefläche ausgebildet worden ist, wird mithilfe eines Schiebers diese Lage auf einen benachbarten Schiebetisch geschoben. Von diesem Schiebetisch, welcher geöffnet wird, kann sich nun die Lage auf eine Hubvorrichtung absenken, welche unterhalb des Schiebetisches angeordnet ist. Wird nach Anordnung der Lage auf der Hubvorrichtung bzw. auf der dort bereits befindlichen unteren Lage diese nach unten bewegt, so kann anschließend der Schiebetisch wieder geschlossen werden und die nächste Lage über den Schieber von der Schiebefläche aufnehmen. Auf diese Weise kann Schicht für Schicht jede Lage auf die vorangehende Lage aufgestapelt werden, so dass sich am Ende ein gesamter Sackstapel ausbildet.

Selbstverständlich kann das Zufuhrband in erfindungsgemäßer Weise unterschiedlichst ausgestaltet sein. Die Anfangs-Umlenkrolle dient dabei ausschließlich als Lagerung und stützt damit die Gewichtskraft ab. Auch wird über diese Anfangs-Umlenkrolle das Transportband geführt und hinsichtlich seiner translatorischen Bewegung exakt definiert. Die End-Umlenkrolle dient dazu, die Antriebskraft auf das Zufuhrband zu übertragen. Diese Übertragung kann sowohl in reibschlüssiger Weise und/oder auch in formschlüssiger Weise erfolgen. So ist ein indirekter Antrieb dieser End-Umlenkrolle durch die Antriebsvorrichtung gewährleistet. Zum Beispiel mithilfe einer Reibübertragung kann das Zufuhrband die End-Umlenkrolle umschlingen und auf diese Weise die Antriebskraft aufnehmen. Dies führt zu dem beschriebenen ziehenden Antrieb und damit deutlich weniger Schlupf und damit einhergehend einem geringeren Verschleiß.

Selbstverständlich können für die Übertragung der Antriebskräfte an der End-Umlenkrolle auch Formschlussabschnitte vorgesehen sein, welche in entsprechende Vertiefungen des Zufuhrbandes auf dessen Unterseite eingreifen. Auch eine Kombination unterschiedlicher Kraftübertragungsmöglichkeiten ist im Sinne der vorliegenden Erfindung denkbar.

Das Zufuhrband ist dabei vorzugsweise entlang einer Geraden translatorisch bewegbar. Jedoch sind grundsätzlich auch gekrümmte Verläufe des Zufuhrbandes im Sinne der vorliegenden Erfindung denkbar.

Zwischen der End-Umlenkrolle und der Anfangs-Umlenkrolle können selbstverständlich Stützflächen oder auch Stützrollen vorgesehen sein, um die Gewichtskraft der gefüllten Säcke zwischen dem Zufuhrende und dem Zufuhranfang aufzunehmen. Wird eine Fläche vorgesehen, so handelt es sich dabei vorzugsweise um eine reibarme Fläche, welche auch als Gleitfläche bezeichnet werden kann. Selbstverständlich kann auf diese Weise auch eine Kombination von Gleitflächen und Stützrollen vorgesehen werden, um einen möglichst sauberen und gleichmäßigen Transportverlauf für die gefüllten Säcke zur Verfügung stellen zu können.

Das Zufuhrband selbst kann ebenfalls für eine Förderung der gefüllten Säcke mit einem Reibschluss ausgebildet sein. Jedoch kann das Zufuhrband auch zusätzliche Förderelemente aufweisen, welche eine geometrische Korrelation mit gefüllten Säcken eingehen können und diese sozusagen vor sich herschieben.

Es ist von Vorteil, dass bei einer Zufuhrvorrichtung die Antriebsvorrichtung ein Getriebe und einen Motor aufweist. Ein Motor ist dabei insbesondere ein Elektromotor bzw. ein sogenannter Frequenzumrichter. Selbstverständlich kann die Antriebsvorrichtung auch eine separate Kontrolleinheit aufweisen, um den Antrieb und insbesondere die Übertragung der Antriebskraft zu steuern bzw. zu regeln. Unter einem Getriebe ist dabei insbesondere die Übergabe der Antriebskraft vom Motor auf die End-Umlenkrolle zu verstehen. Dabei kann es sich um ein reines Übertragungsgetriebe handeln. Jedoch sind auch Übersetzungsgetriebe oder Untersetzungsgetriebe möglich, um eine entsprechende Variationsmöglichkeit für den Elektromotor gewährleisten zu können. Auch können unterschiedliche Übersetzungsstufen für unterschiedliche Einsatzsituationen gewählt werden, so dass über das Getriebe mit unterschiedlichen Schaltmöglichkeiten unterschiedliche Palettiergeschwindigkeiten ausgewählt werden können. Neben klassischen Getrieben mit ineinander kämmenden bzw. eingreifenden Kettenrädern bzw. Ritzeln ist selbstverständlich auch ein einfaches Bandgetriebe denkbar. Auch eine Umsetzung von rotatorisch wirkenden Kräften, zum Beispiel über Kegelritzel als Umlenkung, ist im Sinne der vorliegenden Erfindung denkbar.

Vorteilhaft ist es ebenfalls, wenn bei einer Zufuhrvorrichtung der Motor und insbesondere auch das Getriebe unterhalb des Zufuhrbandes angeordnet sind. Damit ist vorzugsweise die gesamte Antriebsvorrichtung unterhalb des Zufuhrbandes angeordnet. Die Begrifflichkeit der Anordnung unterhalb des Zufuhrbandes ist dabei insbesondere auf den Teil des Zufuhrbandes bezogen, auf welchem die gefüllten Säcke transportiert werden. Dies bezieht sich also auf die Schwerkraftrichtung bei Einbausituation der Zufuhrvorrichtung. Damit wird die gesamte Antriebsvorrichtung in einer Position angeordnet, in welcher eine deutlich höhere Schutzwirkung gegen unerwünschte mechanische Beeinflussung besteht. Auch wird der notwendige Platzbedarf für die Antriebsvorrichtung deutlich reduziert, so dass die Anordnung in größerer Nähe zu den restlichen Bauteilen der Palettiervorrichtung, insbesondere in der Nähe eines Rahmens der Schiebevorrichtung, möglich wird.

Ein Vorteil ist es weiter, dass bei einer Zufuhrvorrichtung das Getriebe zumindest ein Kontaktrad mit einer Rotationsachse aufweist, welche koaxial mit der Rotationsachse der End-Umlenkrolle ausgebildet ist. Mit anderen Worten ist das Kontaktrad mit der End-Umlenkrolle drehmomentfest verbunden, so dass ein Antrieb des Kontaktrades in koaxialer Weise mit einem Antrieb der End-Umlenkrolle gleichgesetzt werden kann. So kann ein solches Kontaktrad für die Aufnahme der Antriebskraft ausgebildet sein. Wird als Getriebe zum Beispiel ein Bandgetriebe vorgesehen, so kann das Kontaktrad eine entsprechende reibungsoptimierte Oberfläche aufweisen, um über einen Reibschluss und einen Umschlingungswinkel von dem Band die Antriebskraft aufzunehmen. Ist das Getriebe abschnittsweise als Zahnradgetriebe ausgebildet, so kann das Kontaktrad ebenfalls eine entsprechende Zahnradoberfläche aufweisen, um in gewünschter Weise die Antriebskräfte aufnehmen zu können. Mit anderen Worten ist die tatsächliche Ausbildung des Kontaktrades an die tatsächliche Ausbildung des Getriebes angepasst.

Ein weiterer Vorteil ist erzielbar, dass bei einer Zufuhrvorrichtung der Motor eine Rotationsachse aufweist, welche von der Rotationsachse der End-Umlenkrolle in Richtung der Anfangs-Umlenkrolle beabstandet angeordnet ist. Mit anderen Worten besteht also ein Versatz zwischen der Rotationsachse des Motors und der Rotationsachse der End-Umlenkrolle gegen die Förderrichtung. Dies führt dazu, dass das Zufuhrende deutlich kleiner und kompakter ausgestaltet werden kann, da dieses Zufuhrende frei vom Motor und damit frei von einem größten Teil der Antriebsvorrichtung ausgebildet ist. Dies erleichtert zum Beispiel die später noch näher erläuterte Möglichkeit, das Zufuhrende durch einen Rahmen einer Schiebevorrichtung in die Palettiervorrichtung einzuführen. Der Versatz ist also entgegen der Zufuhrrichtung vorgesehen und damit in Richtung der Anfangs-Umlenkrolle. Insbesondere ist eine solche Ausführungsform kombiniert mit einem Getriebe, welches die Antriebskraft über diesen Versatz hinweg wieder zur End-Umlenkrolle führen kann. Dabei handelt es sich in besonders einfacher und kostengünstiger Weise um einen Riemenantrieb, welcher mit einem entsprechenden Kontaktrad, wie es bereits erläutert worden ist, ausgebildet ist. Die Rotationsachsen des Motors und der End-Umlenkrolle sind dabei vorzugsweise parallel ausgebildet. Auch ist es von Vorteil, wenn bei dieser Ausführungsform der gesamte Motorblock komplett unterhalb des Zufuhrbandes angeordnet ist, so dass kein seitliches Hinausragen des Motorblockes mehr vorliegt. Insbesondere bei einer Ausführungsform mit zwei oder mehr Zufuhrbändern können die einzelnen Zufuhrbänder auf diese Weise alle mit eigenen Antriebsvorrichtungen bzw. mit eigenen und separaten Motoren ausgebildet werden.

Ein weiterer Vorteil kann es sein, wenn bei einer Zufuhrvorrichtung der Motor eine Rotationsachse aufweist, welche parallel oder im Wesentlichen parallel zu einer Rotationsachse der End-Umlenkrolle ausgerichtet ist. Dies führt dazu, dass eine besonders einfache Getriebefunktion ausreicht, um die Antriebskraft vom Motor auf die End-Umlenkrolle zu überführen. Insbesondere handelt es sich bei einer solchen Ausführungsform um eine Ausbildung mit einem Getriebe in Form eines Bandgetriebes mit entsprechender Umschlingung. Dies reduziert die Komplexität des gesamten Konstruktionsaufwandes weiter. Insbesondere kann ein Eckumsetzgetriebe vermieden werden. Eine besondere Form ist dabei eine koaxiale Ausbildung der Rotationsachse des Motors mit der Rotationsachse der End-Umlenkrolle, so dass sogar ein Direktantrieb möglich wird. Nicht zuletzt ist es denkbar, dass der Motor als Rohrmotor sogar innerhalb der End-Umlenkrolle angeordnet ist, so dass eine maximiert platzsparende Ausführungsform gegeben werden kann.

Vorteilhaft ist es weiter, wenn bei einer Zufuhrvorrichtung zumindest zwei Zufuhrbänder vorgesehen sind, welche insbesondere parallel und/oder nebeneinander angeordnet sind, wobei die Antriebsvorrichtung als gemeinsame Antriebsvorrichtung für den Antrieb der zumindest zwei Zufuhrbänder ausgebildet ist. Dabei kann die gemeinsame Antriebsvorrichtung einen einzigen Motor aufweisen, welcher über ein verteilendes Getriebe die beiden Zufuhrbänder ansteuert. Selbstverständlich kann auch für weitere Zufuhrbänder eine separate Antriebsvorrichtung oder weitere Motoren vorgesehen werden. Das Vorsehen von zwei oder mehr Zufuhrbändern ist insbesondere bei komplexen Lagebildern von Vorteil, da auf diese Weise auch zwei oder mehr Reihen der gefüllten Säcke zeitlich parallel auf die Schiebefläche zugeführt werden können. Eine zwischengelagerte Schiebeaktion des Schiebers für eine einzige eingebrachte Reihe kann auf diese Weise unterbleiben, so dass das Ausbilden der jeweiligen Lage zeitreduziert erfolgen kann. Dies wirkt sich positiv auf die gesamte Palettierzeit aus, so dass die erfindungsgemäße Ausbildung der Zufuhrvorrichtung auch hier einen zusätzlichen positiven Effekt auf die Reduktion der Palettierzeit bewirkt.

Der erfindungsgemäße Gegenstand der vorliegenden Erfindung ist eine Palettiervorrichtung für ein Stapeln von gefüllten Säcken zu einem Sackstapel, aufweisend eine Hubvorrichtung sowie eine Schiebevorrichtung mit einer Schiebefläche, einem Schiebetisch und einem Schieber für eine Bewegung einer Lage gefüllter Säcke von der Schiebefläche auf den Schiebetisch. Eine erfindungsgemäße Palettiervorrichtung zeichnet sich dadurch aus, dass für die Zufuhr der gefüllten Säcke eine Zufuhrvorrichtung gemäß der vorliegenden Erfindung neben der Schiebevorrichtung angeordnet ist. Dies führt dazu, dass durch eine erfindungsgemäße Palettiervorrichtung die gleichen Vorteile erzielbar sind, wie sie ausführlich mit Bezug auf eine Zufuhrvorrichtung erläutert worden sind. Wie bereits eingangs beschrieben, dient die gesamte Palettiervorrichtung dazu, von einer Herstellvorrichtung gefüllte Säcke aufzunehmen und einen kompletten Sackstapel für den Weitertransport bzw. eine verbesserte und vereinfachte Lagerung zur Verfügung zu stellen. Wird von der Herstellvorrichtung nun eine Vielzahl gefüllter Säcke zur Verfügung gestellt, so kann diese mit einer Zufuhrvorrichtung auf die Schiebefläche der Schiebevorrichtung zugeführt werden. Dies wird durch die erfindungsgemäße Ausbildung hinsichtlich des Platzbedarfes und hinsichtlich der Verschleißsituation deutlich verbessert ermöglicht. Sobald die einzelnen gefüllten Säcke in Reihen eine Lage auf der Schiebefläche ausgebildet haben, wird durch den Schieber diese ausgebildete Lage auf den Schiebetisch bewegt und von dort auf die Hubvorrichtung abgelassen. Auf der Hubvorrichtung kann sich dabei eine Palette befinden bzw. die bereits fertiggestellten und abgesetzten vorherigen Lagen. Diese Schritte werden durchgeführt, bis eine maximale Stapelhöhe für den Sackstapel erreicht wird und anschließend kann eine neue Palette neu befüllt werden. Selbstverständlich kann eine erfindungsgemäße Palettiervorrichtung auch das Erzeugen eines Sackstapels palettenfrei durchführen, also mit einer Ausbildung mit entsprechenden Aushebeaussparungen im Sackstapel selbst. Somit können zusätzliche Umhüllungsvorrichtungen vorgesehen sein, welche den fertigen Sackstapel mit entsprechend stabilisierenden Umhüllungen versehen.

Die erfindungsgemäße Palettiervorrichtung sieht vor, dass die Schiebevorrichtung einen mechanisch stabilen Rahmen aufweist mit einem Rahmenausschnitt für ein Einlaufen der zugeführten Säcke auf die Schiebefläche und für ein Hindurchragen des Zufuhrendes des Zufuhrbandes durch den Rahmen. Der Rahmen dient dazu, eine mechanische Lagerungsposition auszubilden für sämtliche statischen und bewegbaren Teile der Schiebevorrichtung sowie der weiteren Palettiervorrichtung. Durch diesen Rahmenausschnitt ragt erfindungsgemäß das Zufuhrende hindurch, wobei ein entsprechender Versatz einer Rotationsachse eines Motors der Antriebsvorrichtung und der Rotationsachse der End-Umlenkrolle besteht. Dies führt dazu, dass ausschließlich die End-Umlenkrolle durch diesen Rahmenausschnitt hindurchragt, und der Motor der Antriebsvorrichtung weiter außerhalb des Rahmens befestigbar ist. Neben der Reduktion des Platzbedarfes innerhalb des Rahmens führt dies zu einer besseren Zugänglichkeit des Motors der Antriebsvorrichtung, so dass Wartungsarbeiten oder Austauscharbeiten am Motor leichter und mit reduzierter Standzeit der Palettiervorrichtung durchgeführt werden können.

Ebenfalls ist von Vorteil, dass bei einer erfindungsgemäßen Palettiervorrichtung die End-Umlenkrolle eine Rotationsachse aufweist, welche auf der anderen Seite des Rahmens der Schiebevorrichtung angeordnet ist, als die Anfangs-Umlenkrolle. Insbesondere ist die gesamte End-Umlenkrolle auf der Innenseite des Rahmens angeordnet. Damit wird die Übergabeposition, welche auch als Zufuhrposition bezeichnet werden kann, für die gefüllten Säcke in Richtung der Schiebefläche verschoben. Dadurch, dass anschließend nur noch ein geringer Weg zu einer Schiebeposition für den Sack zur Ausbildung der definierten Lage erforderlich ist, wird hier weitere Zeit eingespart, so dass ebenfalls der gesamte Palettiervorgang zeitlich optimiert werden kann. Selbstverständlich kann auf diese Weise auch eine Variationsmöglichkeit, zum Beispiel mithilfe einer Kalibriervorrichtung, denkbar sein, welche eine Bewegbarkeit der End-Umlenkrolle oder sogar des gesamten Zufuhrbandes zur Verfügung stellt. Die End-Umlenkrolle ist durch diese Ausführungsform darüber hinaus zusätzlich vor weiteren mechanischen Beeinflussungen durch den Rahmen geschützt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine Ausführungsform eines Sackstapels innerhalb einer Palettiervorrichtung,
- Fig. 2: eine Ausführungsform einer erfindungsgemäßen Palettiervorrichtung,
- Fig. 3: die Ausführungsform der Fig. 2 in einer zweiten Situation während des Palettiervorgangs, und
- Fig. 4: die Ausführungsform der Fig. 2 und 3 in einer schematischen seitlichen Schnittdarstellung.

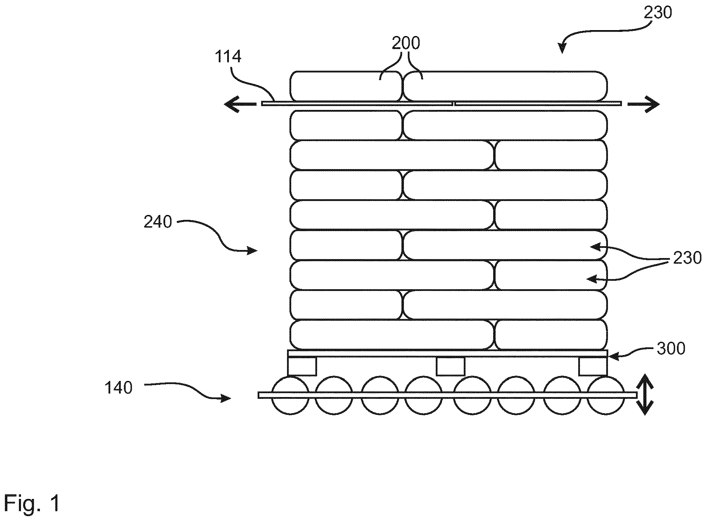

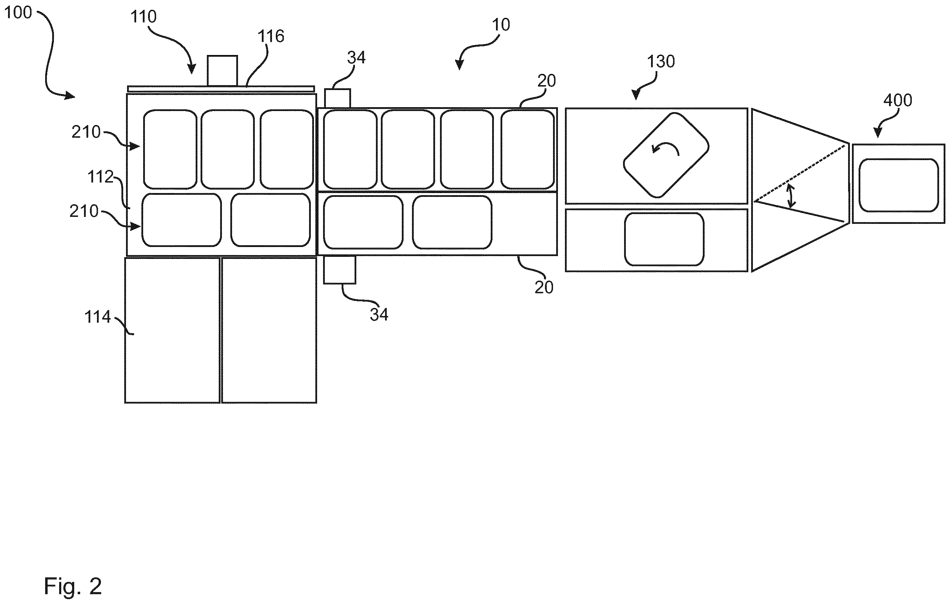

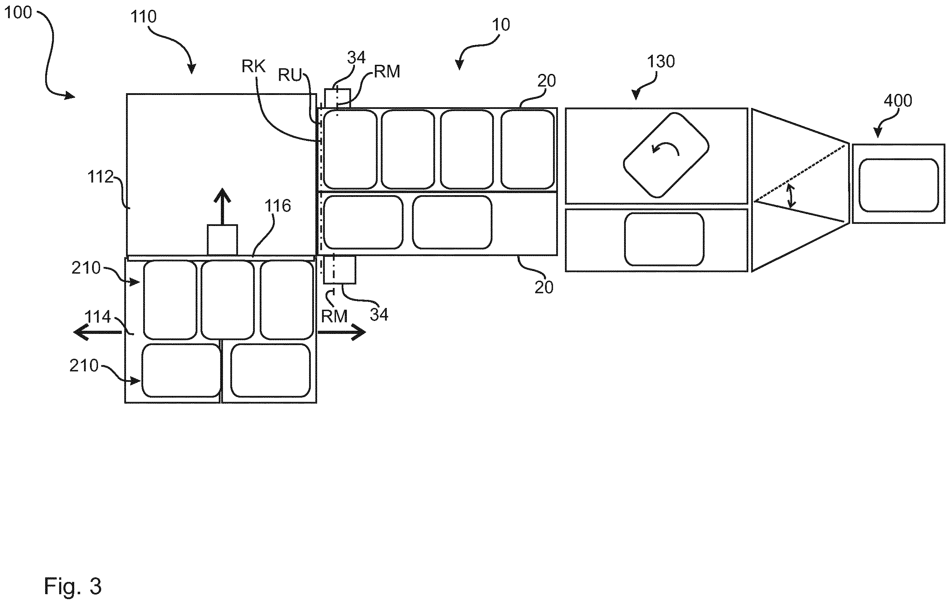

Fig. 1 zeigt schematisch eine seitliche Ansicht einer Palettiervorrichtung 100, insbesondere mit Bezug auf einen Schiebetisch 114. Eine Hubvorrichtung 140 ist in der Lage eine translatorische Auf- und Abbewegung durchzuführen. Auf der Hubvorrichtung 140 ist eine Palette 300 aufgesetzt, welche jedoch hinsichtlich einer Zufuhrvorrichtung 10 bzw. hinsichtlich einer erfindungsgemäßen Palettiervorrichtung 100 nur optional ist. Anschließend sind eine Vielzahl einzelner Lagen 230 der gefüllten Säcke 200 vorgesehen. Um dieses Aufschichten des Sackstapels 240 zu ermöglichen, ist der Schiebetisch 114 geteilt und kann nach links und rechts geöffnet werden. Geschieht dies entlang der Pfeilrichtungen, wie sie die Fig. 1 zeigt, fällt die Lage 230 der gefüllten Säcke 200 auf die darunter angeordnete Lage 230. Anschließend wird die Hubvorrichtung 140 um eine Sackbreite nach unten bewegt, so dass der Schiebetisch 140 sich zur Aufnahme einer weiteren Lage 230 wieder schließen kann. Die weiteren Schritte werden insbesondere mit Bezug auf die Fig. 2 und 3 näher erläutert.

In Fig. 2 ist eine Ausführungsform einer erfindungsgemäßen Palettiervorrichtung 100 dargestellt. Ausgehend von einer Herstellvorrichtung 400, zum Beispiel einer sogenannten Form-Fill-and-Seal-Maschine, werden gefüllte Säcke 200 zur Verfügung gestellt. Über eine schematische Weiche kann eine Drehvorrichtung 130 eine Drehausrichtung der einzelnen Säcke 200 verändern. Hier sind zwei Zufuhrbänder 200 einer Zufuhrvorrichtung 10 dargestellt, welche die einzelnen Säcke 200 in unterschiedlichen Rotationsausrichtungen in die Schiebevorrichtung 110 zuführen. In der Fig. 2 ist dargestellt, wie bereits eine komplette Lage 230 mit zwei Reihen 210 auf einer Schiebefläche 112 angeordnet ist. Ein Schieber 116 kann nun die fertig ausgebildete Lage 230 von der Schiebefläche 112 auf den Schiebetisch 114 bewegen, wie dies die Fig. 3 in Endposition zeigt.

Weiter ist hier gut zu erkennen, dass jeweils eine eigene Antriebsvorrichtung 30 mit entsprechenden Motoren 34 für die beiden Zufuhrbänder 20 vorgesehen ist. Auch sind hier gut die Korrelationen der Rotationsachse RM des Motors 34, der Rotationsachse RU der End-Umlenkrolle 22a des Zufuhrbandes 20 sowie die Rotationsachse RK eines Kontaktrades 32a zu erkennen.

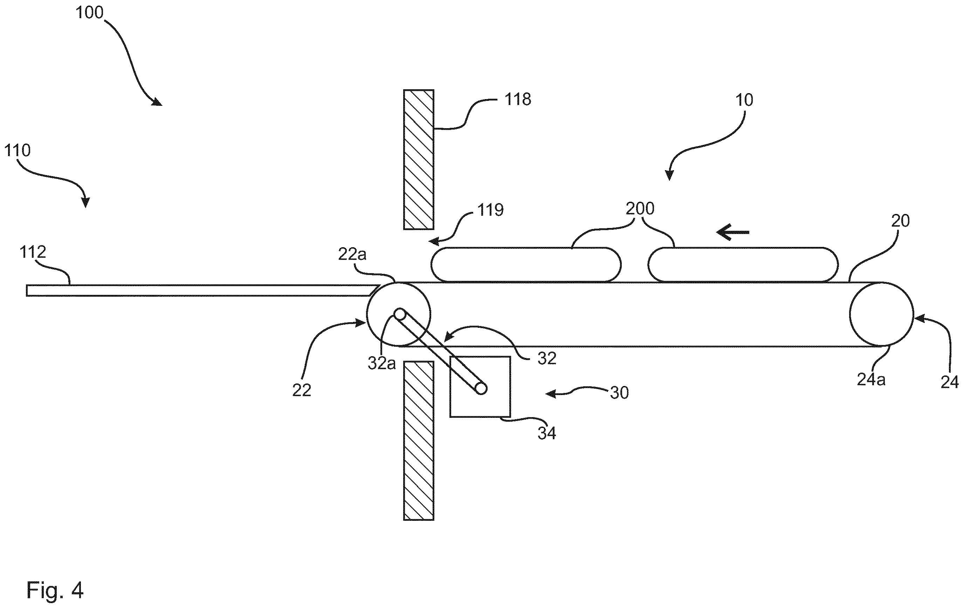

In Fig. 4 ist dargestellt, was durch die erfindungsgemäße Anordnung der Antriebsvorrichtung in idealer Weise nun möglich wird. Während grundsätzlich ein Zugbetrieb für das Zufuhrband 20 vorgesehen wird, welcher reduzierten Schlupf und damit reduzierten Verschleiß mit sich bringt, kann nun eine versetzte Anordnung des Motors 34 möglich werden. Die Schiebevorrichtung 110 ist hier mit einem mechanisch stabilisierenden Rahmen 118 versehen, welcher einen Rahmenausschnitt 119 aufweist. Das Zufuhrband 20 ragt nun mit seinem Zufuhrende 22 durch diesen Rahmenausschnitt 119 hindurch, so dass eine entsprechend optimierte Zufuhrposition für die gefüllten Säcke 200 auf der Zufuhrfläche 112 möglich wird. Die Lagerung des Zufuhrbandes 20 erfolgt hier insbesondere über die Anfangs-Umlenkrolle 24a und die End-Umlenkrolle 22a. Der Zufuhranfang 24 und damit auch die Anfangs-Umlenkrolle 24a ist dabei auf der entgegengesetzten Seite des Rahmens 118 angeordnet, als die End-Umlenkrolle 22a am Zufuhrende 22.

Um eine erfindungsgemäße Anordnung der Antriebsvorrichtung 30 noch weiter zu verbessern, befindet sich der Motor 34 unterhalb des Zufuhrbandes 20. Gleichzeitig ist der Motor 34 außerhalb des Rahmens 118 angeordnet, so dass ein Getriebe 32, hier mit einer Bandschlinge bzw. einem Riementrieb, die entsprechende Übertragung der Antriebskräfte vom Motor 34 auf ein Kontaktrad 32a an der End-Umlenkrolle 22a zur Verfügung stellt. Neben einem mechanischen Schutz für den Motor 34 wird hier die hohe geometrische und konstruktive Kompaktheit einer Zufuhrvorrichtung 10 deutlich.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Zufuhrvorrichtung
- 20: Zufuhrband
- 22: Zufuhrende
- 22a: End-Umlenkrolle
- 24: Zufuhranfang
- 24a: Anfangs-Umlenkrolle
- 30: Antriebsvorrichtung
- 32: Getriebe
- 32a: Kontaktrad
- 34: Motor

- 100: Palettiervorrichtung
- 110: Schiebevorrichtung
- 112: Schiebefläche
- 113: Schiebeband
- 114: Schiebetisch
- 116: Schieber
- 118: Rahmen
- 119: Rahmenausschnitt
- 130: Drehvorrichtung
- 140: Hubvorrichtung

- 200: Sack
- 210: Reihe
- 230: Lage
- 240: Sackstapel

- 300: Palette
- 400: Herstellvorrichtung

- RK: Rotationsachse Kontaktrad
- RU: Rotationsachse End-Umlenkrolle
- RM: Rotationsachse Motor

## Patentansprüche

1. Palettiervorrichtung (100) für ein Stapeln von gefüllten Säcken (200) zu einem Sackstapel (240), aufweisend eine Hubvorrichtung (140) sowie eine Schiebevorrichtung (110) mit einer Schiebefläche (112), einem Schiebetisch (114) und einem Schieber (116) für eine Bewegung einer Lage (230) gefüllter Säcke (200) von der Schiebefläche (112) auf den Schiebetisch (114), für die Zufuhr der gefüllten Säcke (200) eine Zufuhrvorrichtung (10) für die Zufuhr der gefüllten Säcke (200) zu der Palettiervorrichtung (100), aufweisend ein Zufuhrband (20) für die Zufuhr von wenigstens einer Reihe (210) der gefüllten Säcke (200) auf die Schiebefläche (112) der Schiebevorrichtung (110), wobei das Zufuhrband (20) ein Zufuhrende (22) mit einer End-Umlenkrolle (22a) und einen Zufuhranfang (24) mit einer Anfangs-Umlenkrolle (24a) aufweist, wobei die Zufuhrvorrichtung (10) eine Antriebsvorrichtung (30) aufweist, welche mit der End-Umlenkrolle (22a) in Antriebsverbindung steht, neben der Schiebevorrichtung (110) angeordnet ist, wobei die Schiebevorrichtung (110) einen mechanisch stabilen Rahmen (118) aufweist mit einem Rahmenausschnitt (119) für ein Einlaufen der zugeführten Säcke (200) auf die Schiebefläche (112) und für ein Hindurchragen des Zufuhrendes (22) des Zufuhrbandes (20) durch den Rahmen (118), wobei die Antriebsvorrichtung (30) ein Getriebe (32) und einen Motor (34) aufweist, wobei das Getriebe (32) zumindest ein Kontaktrad (32a) mit einer Rotationsachse (RK) aufweist, welche koaxial mit einer Rotationsachse (RU) der End-Umlenkrolle (22a) ausgebildet ist, so dass ein Versatz zwischen der Rotationsachse (RM) des Motors (34) und der Rotationsachse (RU) der End-Umlenkrolle (22a) gegen die Förderrichtung besteht, wobei der Motor (34) außerhalb des Rahmens (118) angeordnet ist.

2. Palettiervorrichtung (100) nach Anspruch 1, **dadurch gekennzeichnet, dass** der Motor (34) und insbesondere auch das Getriebe (32) unterhalb des Zufuhrbandes (20) angeordnet sind.

3. Palettiervorrichtung (100) nach einem der Ansprüche 1 bis 2, **dadurch gekennzeichnet, dass** der Motor (34) eine Rotationsachse (RM) aufweist, welche von der Rotationsachse (RU) der End-Umlenkrolle (22a) in Richtung der Anfangs-Umlenkrolle (24a) beabstandet angeordnet ist.

4. Palettiervorrichtung (100) nach einem der Ansprüche 1 bis 3, **dadurch gekennzeichnet, dass** der Motor (34) eine Rotationsachse (RM) aufweist, welche parallel oder im Wesentlichen parallel zu einer Rotationsachse (RU) der End-Umlenkrolle (22a) ausgerichtet ist.

5. Palettiervorrichtung (100) nach einem der Ansprüche 1 bis 4, **dadurch gekennzeichnet, dass** zumindest zwei Zufuhrbänder (20) vorgesehen sind, welche insbesondere parallel und/oder nebeneinander angeordnet sind, wobei die Antriebsvorrichtung (30) als gemeinsame Antriebsvorrichtung (30) für den Antrieb der zumindest zwei Zufuhrbänder (20) ausgebildet ist.

6. Palettiervorrichtung (100) nach Ansprüche 1 bis 5, **dadurch gekennzeichnet, dass** die End-Umlenkrolle (22a) eine Rotationsachse (RU) aufweist, welche auf der anderen Seite des Rahmens (118) der Schiebevorrichtung (110) angeordnet ist, als die Anfangs-Umlenkrolle (24a).

## Claims

1. A palletizing device (100) for a stacking of filled bags into a stack of bags (240), having a lifting device (140) as well as a sliding device (110) with a sliding surface (112), a sliding table (114) and a slider (116) for a movement of a layer (230) of filled bags (200) from the sliding surface (112) onto the sliding table (114), for the feeding of the filled bags (220) a feeding device (10) for the feeding of the filled bags (200) into the palletizing device (100), having a feed belt (20) for the feeding of at least one row (210) of the filled bags (200) onto the sliding surface (112) of the sliding device (110), wherein the feed belt (20) has a infeed end (22) with an end deflection roller (22a) and a feed beginning (24) with a beginning deflection roller (24a), wherein the feeding device (10) has a drive device (30), which is in drive connection with the end deflection roller (22a), is arranged next to the sliding device (110), wherein the sliding device (110) has a mechanically stable frame (118) with a frame portion (119) for an entry of the fed bags (200) onto the sliding surface (112) and for a protruding of the infeed end (22) of the feed belt (20) through the frame (118), wherein the drive device (30) has a gear mechanism (32) and a motor (34), wherein the gear mechanism (32) has at least one contact wheel (32a) with an axis of rotation (RK), which is designed coaxially with an axis of rotation (RU) of the end deflection roller (22a), such that an offset exists between the axis of rotation (RM) of the motor (34) and the axis of rotation (RU) of the end deflection roller (22a) with respect to the conveying direction, wherein the motor (34) is arranged outside the frame (118).

2. A palletizing device (100) according to Claim 1, **characterized in that** the motor (34) and in particular, also the gear mechanism (32) are arranged beneath the feed belt (20).

3. A palletizing device (100) according to any one of Claims 1 to 2, **characterized in that** the motor has an axis of rotation (RM), which is arranged spaced apart from the axis of rotation (RU) of the end deflection roller (22a) in the direction of the beginning deflection roller (24a).

4. A palletizing device (100) according to any one of Claims 1 to 3, **characterized in that** the motor (34) has an axis of rotation (RM), which is aligned parallel or substantially parallel to an axis of rotation (RU) of the end deflection roller (22a).

5. A palletizing device (100) according to any one of Claims 1 to 4, **characterized in that** at least two feed belts (20) are provided, which are arranged in particular parallel and/or side by side, wherein the drive device (30) is designed as a joint drive device (30) for the drive of the at least two feed belts (20).

6. A palletizing device (100) according to Claims 1 to 5, **characterized in that** the end deflection roller (22a) has an axis of rotation (RU), which is arranged on the other side of the frame (118) of the sliding device (110), than the beginning deflection roller (24a).

## Revendications

1. Dispositif de palettisation (100) pour un empilage de sacs remplis (200) pour former une pile de sacs (240), présentant un dispositif de levage (140) ainsi qu'un dispositif de poussée (110) avec une surface de poussée (112), une table de poussée (114) et un pousseur (116) pour un mouvement d'une couche (230) de sacs remplis (200) à partir de la surface de poussée (112) vers la table de poussée (114), pour l'acheminement des sacs remplis (200) un dispositif d'acheminement (10) pour l'acheminement des sacs (200) vers le dispositif de palettisation (100), présentant une bande d'acheminement (20) pour l'acheminement d'au moins une rangée (210) de sacs remplis (200) vers la surface de poussée (112) du dispositif de poussée (110), la bande d'acheminement (20) présentant une extrémité d'acheminement (22) avec un rouleau de renvoi d'extrémité (22a) et un début d'acheminement (24) avec un rouleau de renvoi de début (24a), le dispositif d'acheminement (10) présentant un dispositif d'entraînement (30), lequel est en relation d'entraînement avec le rouleau de renvoi d'extrémité (22a), est disposé près du dispositif de poussée(110), le dispositif de poussée(110) présentant un cadre (118) mécaniquement stable avec une découpe de cadre (119) pour une entrée des sacs remplis (200) vers la surface de poussée (112) et pour que l'extrémité d'acheminement (22) de la bande d'acheminement (20) traverse le cadre (118), le dispositif d'entraînement (30) présentant une transmission (32) et un moteur (34), la transmission (32) présentant au moins une roue de contact (32a) avec un axe de rotation (RK), lequel est constitué de façon coaxiale à un axe de rotation (RU) du rouleau de renvoi d'extrémité (22a) de telle sorte qu'il existe un décalage entre l'axe de rotation (RM) du moteur (34) et l'axe de rotation (RU) du rouleau de renvoi d'extrémité (22a) par rapport à la direction de transport, le moteur (34) étant disposé à l'extérieur du cadre (118).

2. Dispositif de palettisation (100) selon la revendication 1, **caractérisé en ce que** le moteur (34) et en particulier également la transmission (32) sont disposés au-dessous de la bande d'acheminement (20).

3. Dispositif de palettisation (100) selon l'une des revendications 1 à 2, **caractérisé en ce que** le moteur (34) présente un axe de rotation (34), lequel est disposé à distance de l'axe de rotation (RU) du rouleau de renvoi d'extrémité (22a) en direction du rouleau de renvoi de début (24a).

4. Dispositif de palettisation (100) selon l'une des revendications 1 à 3, **caractérisé en ce que** le moteur (34) présente un axe de rotation (RM), lequel est orienté parallèlement ou essentiellement parallèlement à un axe de rotation (RU) du rouleau de renvoi d'extrémité (22a).

5. Dispositif de palettisation (100) selon l'une des revendications 1 à 4, **caractérisé en ce qu'**il est prévu au moins deux bandes d'acheminement (20), lesquelles sont disposées en particulier parallèlement et/ou de façon juxtaposée, le dispositif d'entraînement (30) étant constitué en tant que dispositif d'entraînement (30) commun pour l'entraînement des au moins deux bandes d'acheminement (20).

6. Dispositif de palettisation (100) selon l'une des revendications 1 à 5, **caractérisé en ce que** le rouleau de renvoi d'extrémité (22a) présente un axe de rotation (RU), lequel est disposé sur un côté du cadre (118) du dispositif de poussée (110) autre que le rouleau de renvoi de début (24a).
